# EUROPÄISCHE PATENTSCHRIFT

(11) **EP 2 792 963 B1**
(45) Veröffentlichungstag und Bekanntmachung des Hinweises auf die Patenterteilung: **28.06.2017**
(21) Anmeldenummer: 13164349.6
(22) Anmeldetag: 18.04.2013
(51) Int. Cl.: F24F 13/22, F24H 8/00, F16L 55/07, F24F 13/02

(54) **Kondenswasserabführung für Dachentlüfter**
Condensed water discharge for roof ventilators
Evacuation de condensat pour aérateur de toiture

(43) Veröffentlichungstag der Anmeldung: 22.10.2014
(73) Patentinhaber: Tebest, Arnd, 47652 Weeze (DE); Geschwandtner, Rainer, 46414 Rhede (DE)
(72) Erfinder: Tebest, Arnd, 47652 Weeze (DE)
(74) Vertreter: Michalski Hüttermann & Partner Patentanwälte mbB

(56) Entgegenhaltungen:
- DE-A1- 1 709 020
- DE-A1- 3 446 435
- DE-U1- 29 510 477

## Beschreibung

Die vorliegende Erfindung betrifft eine modulare Kondenswasserabführung für alle Arten von Dachentlüftern für Steildächer und Flachdächer.

Vorrichtungen zur Kondenswasserabführung für Dachentlüfter, wie zum Beispiel Sanitärlüfter oder Wrasenlüfter, sowohl für Steildächer als auch für Flachdächer sind seit langem bekannt.

Kondenswasserbildung bei Dachentlüftungssystemen tritt insbesondere dann verstärkt auf, wenn in Perioden mit kaltem Wetter die vergleichsweise warme Abluft im Bereich der Dachdurchführung in den außerhalb des Gebäudes liegenden Abschnitt des Entlüftungsrohres aufsteigt und dort schlagartig abgekühlt wird. Das Kondenswasser bildet sich im Allgemeinen innen im Rohr und es besteht die Gefahr, dass es wieder in den Innenraum des Gebäudes zurückfließt. Insbesondere bei Küchenlüftungen, wie beispielsweise beim Einsatz von Wrasenlüftern, die in der Abluft ein Gemisch aus feuchter und Öl-haltiger warmer Luft enthalten, ist dies allein aus Hygienegründen besonders unerwünscht. Um die Gefahr der Kondenswasserbildung zu reduzieren, ist vorgeschlagen worden, eine Wärmeisolation der Luftleitung, insbesondere im Bereich der Dachdurchführung, vorzunehmen. Es hat sich jedoch gezeigt, dass bei niedrigen Außentemperaturen unter -5°C selbst diese Maßnahme nicht ausreicht, um Kondenswasserbildungen zu vermeiden. Infolgedessen ist es selbst bei der Anwendung von Luftleitungen mit Wärmedämmstoffen gewöhnlich erforderlich, die Luftleitung in dem kritischen äußeren Bereich mit Maßnahmen zu versehen, das Kondenswasser abzuführen. Hierzu ist beispielsweise ein System vorgeschlagen worden, das einen festen seitlichen Stutzen am Lüfterrohr mit Schlauchanschluss zur Wasserabführung vorsieht. Dieser befindet sich allerdings innerhalb des Gebäudes und weist den Nachteil auf, dass das gebildete Wasser in irgendeiner Weise sicher gesammelt und abgeführt werden muss.

Eine Abführung des Kondenswassers über die Außenseite des Entlüftungsrohrs mit einem speziellen Abdichtungsflansch ist beispielsweise in der DE 1 709 020 A beschrieben. Die DE 34 46 435 A1 beschreibt ein komplettes Rohr zur Be- und Entlüftung, welches einen innenliegenden Kragen aufweist, der eine Rinne mit der Innenwand des Rohrs bildet. Die Rinne ist mit einer Leitung nach außen verbunden und als in Rohrleitungen einsetzbares Element ist am oberen Ende des Rohrs eine Muffe ausgebindet

In der DE 29 18 057 A1 wird eine weitere Lösung für die Kondenswasserabführung bei Dunstrohren beschrieben, die eine Auffangwanne außerhalb des freien Rohrquerschnitts und längs des ganzen Rohrumfangs als sackartige Ausstülpung vorsieht.

Die genannten Einrichtungen zur Kondenswasserabführung weisen jedoch immer noch einige Nachteile auf. Neben der Tatsache, dass das Kondenswasser zumindest teilweise aufgefangen wird und sich somit unhygienisches stehendes Wasser bildet, sind alle genannten Lösungen zudem auch aufwendig in der Herstellung und nicht modular einsetzbar- Mit anderen Worten können sie vorgeschlagenen Sondermaßnahrnen nur durch den Einsatz spezieller Bauteile realisiert werden. Außerdem sind die beschriebenen Lösungen nicht individuell an die jeweilige Einbausituation und die Dachkonstruktion anpassbar, weil die vorgefertigten Spezialbauteile in ihren Dimensionierungen festgelegt sind. Dies trifft beispielsweise insbesondere auf solche Dachkonstruktionen mit Außendämmung zu, die einen deutlich vergrößerten Dachaufbau aufweisen. Hier würden die beschriebenen Spezialbauteile nicht einpassbar sein. Weiterhin ist es in jedem Fall wünschenswert, das Kondenswasser nicht in den Innenraum des Gebäudes gelangen zu lassen sondern oberhalb der Dachkonstruktion nach Außen abzuführen.
Aufgabe der vorliegenden Erfindung ist es daher, eine Kondenswasserabführung für Dachentlüftungen bereit zu stellen, die das Kondenswasser oberhalb der Dachkonstruktion nach Außen abzuführen vermag, insbesondere ohne dass sich stehendes Wasser bilden kann. Die Kondenswasserabführung soll modular einsetzbar sein, mit geringem Herstellungsaufwand verbunden und möglichst an die jeweilige Einbausituation bzw. Dachkonstruktion anpassbar sein.
Diese Aufgabe wird erfindungsgemäß gelöst durch eine Kondenswasserabführung für Dachlüfter, mit den Merkmalen des Anspruchs 1. Mit der erfindungsgemäßen Vorrichtung ist es vorteilhafterweise möglich, eine modular einsetzbare Kondenswasserabführung für Dachlüfter, wie beispielsweise Sanitärlüfter oder Wrasenlüfter, bereit zu stellen, die eine zuverlässige Abfuhr des Kondenswassers insbesondere bei Wrasenlüftern derart ermöglicht, dass sich möglichst kein stehendes Wasser bildet. Das Kondenswasser gelangt vorteilhafterweise nicht zurück in den Innenraum des Gebäudes sondern wird auf die Dachaußenseite abgeführt. Gleichzeitig ist es mit der erfindungsgemäßen Sicherungsvorrichtung ohne Änderung der Vorrichtung möglich, die Sicherungsvorrichtung auch bei einer zusätzlichen Aufdachdämmung zu montieren und damit der jeweiligen Dachkonstruktion anzupassen. Außerdem stellt die Kondenswasserabführung mit seinen drei Ringabschnitten eine recht einfache Konstruktion dar, die ohne großen Herstellungsaufwand in großen Stückzahlen preiswert produziert werden kann.

Mit anderen Worten wird erfindungsgemäß eine Ergänzung zu den herkömmlichen Entlüftungssystemen bereit gestellt, die einen speziellen Ring zur Innenmontage in den Außen liegenden Abschnitt eines Dachentlüftungsrohrs umfasst. Der Ring weist eine zur Horizontalen geneigte Schulter auf, entlang derer das sich bildende Kondenswasser zu einer Öffnung im Entlüftungsrohr fließen kann und auf diese Weise nach Außen auf die Dachfläche abgeführt wird.

In einer bevorzugten Ausgestaltung der Erfindung wird die Neigung gegen die Horizontale des Neigungsabschnitts definiert durch die Differenz der Schulterhöhen des ersten Ringabschnitts.
Auf diese Weise ist die Neigung auf einfache Weise bei der Herstellung einstellbar. Es bedarf nur einer geringfügigen Änderung des Werkzeugs, um eine Neigungsänderung zu realisieren.

Gemäß einer weiteren bevorzugten Ausgestaltung der Erfindung kann die Neigung gegen die Horizontale des Neigungsabschnitts 0,05° bis 10°, bevorzugt 0,5° bis 6° und insbesondere 1° bis 3°, betragen. Besonders bevorzugt beträgt die Neigung gegen die Horizontale 2°.
Dies ermöglicht eine zuverlässige Abführung des Kondenswassers ohne unnötige Verwirbelungen aufgrund einer zu hohen Fließgeschwindigkeit. Ebenso wird eine zu geringe Fließgeschwindigkeit vermieden, die im Winter bei kalten Außentemperaturen zu einer Vereisung führen könnte.

In einer weiteren bevorzugten Ausgestaltung der erfindungsgemäßen Vorrichtung kann die Kondenswasserabführung einstückig gefertigt sein.
Im Vergleich zu einer mehrteiligen Ausführung ist eine einstückige Herstellung, beispielsweise durch Tiefziehen, vor dem Hintergrund der Anforderungen an die Lebensdauer von Jahrzehnten und der Wechseltemperaturbeständigkeit aufgrund der größeren Materialintegrität vorteilhaft.

Gemäß einer weiteren bevorzugten Ausgestaltung der Erfindung kann die Kondenswasserabführung aus Kunststoff, insbesondere aus PVC, PS, PMMA, ABS, ASA oder einem faserverstärkten Kunststoff, aus Metall oder aus Ton oder Beton gefertigt sein.
Die Materialwahl ist universell und kann insbesondere unter Berücksichtigung des Materials des zu verwendenden Entlüftungsrohrs und der Voraussetzungen der übrigen Dachkonstruktion getroffen werden. Dadurch ist eine möglichst gute Anpassung an das Material des Entlüftungsrohrs gegeben.

Die Wahl des geeigneten Materials wird wiederum wesentlich bestimmt von den Vorgaben der Dauerhaltbarkeit auch bei vielen und großen Temperaturwechseln. Mit den genannten Materialien wird sicher gestellt, dass eine mehr als ausreichende Stabilität der erfindungsgemäßen Kondenswasserabführung erzielt wird bei gleichzeitig langer Lebensdauer auch bei ständiger Bewitterung. Als Kunststoffe kommen neben PVC (Polyvinylchlorid), PS (Polystyrol), PMMA (Polymethylmethacrylat), PP (Polypropylen), PE (Polyethylen), ABS (Acrylnitrilbutadien-styrol) und ASA (Acrylester-Styrol-Acrylnitril) insbesondere verstärkte Kunststoffe wie beispielsweise faserverstärkte Kunststoffe GFK und/oder CFK oder auch Kohlenfasermaterialien in Betracht. Auch Verbundwerkstoffe aus Metall und Kunststoff können für die erfindungsgemäße Kondenswasserabführung eingesetzt werden, ebenso wie rein metallische Materialien wie Aluminium, Kupfer, Zink oder Edelstahl und sogar Ton oder Beton.

Die Erfindung betrifft weiterhin ein Dachentlüftungssystem umfassend eine erfindungsgemäße Kondenswasserabführung nach einer der vorstehend beschriebenen Ausgestaltungen oder gemäß einer Kombination von einer oder mehreren der vorstehenden Ausgestaltungen und ein rohrförmiges Lüfterelement mit einer Öffnung, wobei die Kondenswasserabführung in das Lüfterelement einschiebbar und an der Innenwand des Lüftungselements wasserfest derart fixierbar ist, dass der tiefste Punkt des Neigungsabschnitts zur Öffnung des Lüfterelements orientiert ist.

Das erfindungsgemäße Lüftersystem umfasst mit anderen Worten eine Kondenswasserabführung wie vorstehend als Bestandteil der Erfindung angegeben und zudem ein Lüfterelement bzw. Lüfterrohr. Das Lüfterelement kann aus Kunststoff, Keramik oder aus Metall gefertigt sein. Die beiden Komponenten des erfindungsgemäßen Systems sind derart aufeinander abgestimmt, dass die Kondenswasserabführung ohne viel Spiel in das Lüfterelement eingeschoben werden kann und nach einer entsprechenden Ausrichtung dort befestigt werden kann. Die Befestigung kann durch Kleben erfolgen und insbesondere derart vorgesehen sein, dass die Neigung der Kondenswasserabführung so ausgerichtet wird, dass ihr tiefster Punkt gerade in die Öffnung in der Außenwand des Lüfterelements mündet. Hierdurch ist ein zuverlässiges Ablaufen des Wassers sichergestellt, ohne dass sich stehendes Wasser bilden kann. Hierdurch kann unerwünschte Geruchs- und Schimmelbildung vermieden werden. Außerdem kann eine mechanische Belastung aufgrund von wechselndem Gefrieren und Wiederauftauen ausgeschlossen werden.

Das erfindungsgemäße Lüftersystem kann zudem vorteilhafterweise sowohl für Steildächer als auch für Flachdächer eingesetzt werden, ohne dass es Spezialbauteile benötigt.

Als Kleber kommen alle dem Fachmann bekannten Kleber in Betracht. Erfindungsgemäß wird der Kleber nach den zu fügenden Materialien ausgewählt. Beispielsweise kann man für die Befestigung von Kondenswasserabführungen aus Ton oder Beton einen Epoxidharzkleber verwenden, für PVC oder ABS Kondenswasserabführungen kann ein PVC-hart-Kleber eingesetzt werden. Werden metallische Lüfterrohre vorgesehen, so kann beispielsweise ein elastischer, einkomponentiger Kleber auf POP-Mischpolymerbasis ausgewählt werden, der eine gute Haftung mit Duro- und Thermoplasten erzielt.

In einer bevorzugten Ausgestaltung des erfindungsgemäßen Dachentlüftungssystems kann die Öffnung des Lüftungselements als Langloch ausgebildet sein. Zusätzlich können ein oder mehrere vertikale Streben im Bereich des Langlochs vorgesehen sein, die gewissermaßen ein kleines Gitter bilden können. Insgesamt kann hierdurch eine sichere Abführung des vom Rohrinneren ausfließenden Kondenswassers erzielt werden, wobei die Gefahr, dass durch Schmutz oder Schnee eine Verstopfung der Öffnung eintritt, verringert ist.

In einer bevorzugten Ausgestaltung des erfindungsgemäßen Dachentlüftungssystems kann vorgesehen sein, dass sich die Öffnung des Lüftungselements in Einbaulage auf der Außenseite des Dachs befindet.

Dies ist mit dem erfindungsgemäßen Dachentlüftungssystem vorteilhafterweise auch bei Dächern mit Außendämmung, nämlich bei Steildächern und auch bei Flachdächern, ohne weitere Maßnahmen vorzunehmen möglich.

Die Erfindung betrifft außerdem ein Verfahren zur Herstellung eines Dachentlüftungssystems umfassend folgende Schritte:
- Bereitstellen einer Kondenswasserabführung nach einer der vorstehend beschriebenen Ausgestaltungen oder gemäß einer Kombination von einer oder mehreren der vorstehenden Ausgestaltungen,
- Bereitstellen eines rohrförmigen Lüfterelements mit einer Öffnung,
- Einschieben der Kondenswasserabführung in das Lüfterelement in einer Orientierung, die ein Ablaufen von Kondenswasser entlang der Neigung des Neigungsabschnitts zur Öffnung des Lüfterelements sicherstellt,
- Befestigen der Kondenswasserabführung an der Innenseite des Lüfterelements in dieser Orientierung.

Mit dem erfindungsgemäßen Verfahren kann vorteilhafterweise eine sichere und anpassbare Kondenswasserabführung für alle Dachentlüftungen universell hergestellt werden, in dem der Dachdecker vor Ort auf der Basis von handelsüblichen Entlüftungssystemen verschiedenster Art durch Einbringen der insbesondere ringförmigen Kondenswasserabführung in das Entlüftungsrohr gemäß dem beschriebenen Verfahren die einfach auszuführenden Schritte durchführt. Einzig auf die Orientierung der Neigung sollte geachtet werden, wobei eine Funktionstüchtigkeit auch bei falsch orientiertem Einbau gegeben ist.

Bevorzugt kann das Befestigen der Kondenswasserabführung mittels Kleben erfolgen.

Wie vorstehend erläutert kann der Kleber anhand der zu fügenden Materialien der Kondenswasserabführung und des Lüfterelements ausgesucht werden. Es wird auf die vorstehenden Beispiele zu Kombinationen von Klebern und Rohrmaterialien verwiesen.

Die Erfindung wird nachfolgend anhand der Figuren in einer bevorzugten Ausgestaltung näher beschrieben, ohne darauf beschränkt zu sein.
Es zeigen:
Fig. 1 eine bevorzugte Ausgestaltung einer erfindungsgemäßen Kondenswasserabführung in einer schematischen Querschnittsansicht und
Fig. 2 eine bevorzugte Ausgestaltung eines erfindungsgemäßen Dachentlüftungssystems umfassend eine erfindungsgemäße Kondenswasserabführung in einer schematischen Querschnittsansicht.

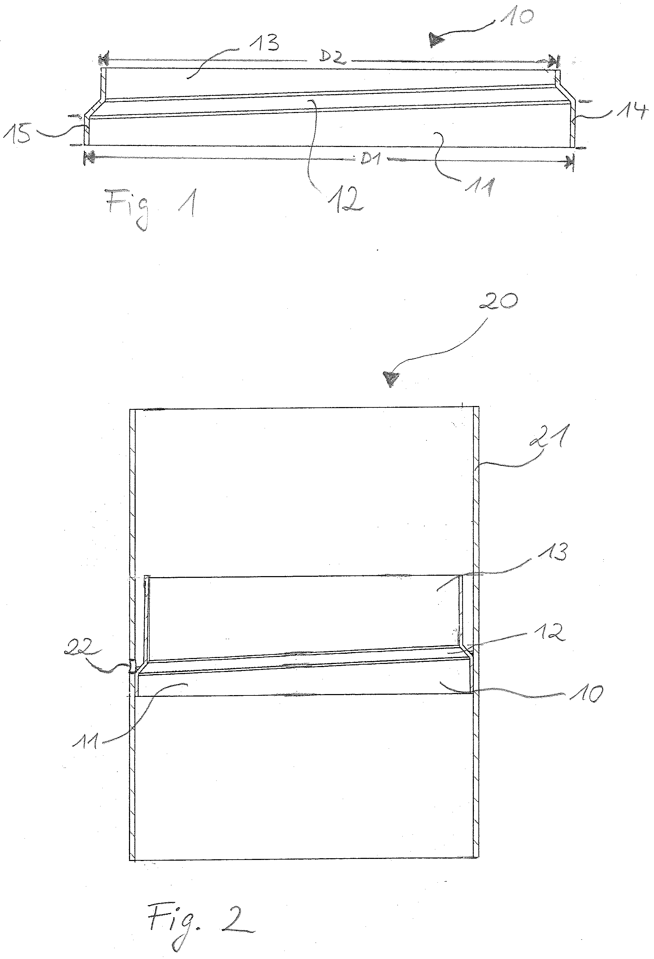

In Figur 1 ist eine erfindungsgemäße Kondenswasserabführung 10 für Dachlüfter und dergleichen, in einer schematischen Querschnittsansicht gezeigt. Die Kondenswasserabführung 10 umfasst einen ersten im Wesentlichen runden Ringabschnitt 11 mit einem ersten Durchmesser D1, einen sich daran in axialer Richtung anschließenden mittleren Neigungsabschnitt 12 und einem sich hieran in axialer Richtung anschließenden zweiten Ringabschnitt 13 mit einem zweiten Durchmesser D2. Der zweite Durchmesser D2 ist kleiner als der erste Durchmesser D1. Erfindungsgemäß ist der mittlere Neigungsabschnitt 12 so angeordnet, dass er eine Neigung gegen die Horizontale aufweist. In der vorliegenden Ausgestaltung weist der Neigungsabschnitt eine Neigung von ca. 2° gegen die Horizontale auf. Die Neigung wird definiert durch die unterschiedlichen Schulterhöhen 14, 15 des ersten Ringabschnitts 11. Die vorliegende Kondenswasserabführung 21 ist einstückig aus PVC durch Tiefziehen gefertigt.

In Figur 2 wird ein erfindungsgemäßes Dachentlüftungssystem 20 in einer schematischen Querschnittsansicht gezeigt, welches eine Kondenswasserabführung 10 und ein Lüfterelement 21 umfasst. Die Kondenswasserabführung ist entsprechend der bereits vorstehend beschriebenen Ausführung der Figur 1 ausgestaltet. Die Kondenswasserabführung 10 ist in das Lüfterelement 21 eingeschoben und an der Innenwand des Lüftungselements 21 wasserfest derart fixiert, dass der tiefste Punkt des Neigungsabschnitts 12 zur Öffnung 22 des Lüfterelements 21 orientiert ist. Die Öffnung 22 des Lüfterelements 21 ist als Bohrung, insbesondere als Langloch, ausgestaltet und befindet sich in Einbaulage außerhalb der Dachkonstruktion.

## Patentansprüche

1. Kondenswasserabführung (10) für Dachlüfter bestehend aus einem Ring zur Innemnontage in ein Dachentlüftungsrohr, umfassend einen ersten im Wesentlichen runden Ringabschnitt (11) mit einem ersten Durchmesser D1, einen sich daran in axialer Richtung anschließenden mittleren Neigungsabschnitt (12) und einem sich hieran in axialer Richtung anschließenden zweiten Ringabschnitt (13) mit einem zweiten Durchmesser D2, wobei der zweite Durchmesser D2 kleiner ist als der erste Durchmesser D1, **dadurch gekennzeichnet, dass** der mittlere Neigungsabschnitt (12) eine Neigung quer zur Längsachse des Rings und zusätzlich eine Neigung in radialer Richtung des Rings aufweist, wobei die beide Neigungen unterschiedlich sind.

2. Kondenswasserabführung nach Anspruch 1, **dadurch gekennzeichnet, dass** die Neigung gegen die Horizontale des Neigungsabschnitts (12) definiert wird durch die Differenz der Schulterhöhen (14, 15) des ersten Ringabschnitts (11).

3. Kondenswasserabführung nach Anspruch 1 oder 2, **dadurch gekennzeichnet, dass** die Neigung gegen die Horizontale des Neigungsabschnitts (12) 0,05° bis 10°, bevorzugt 0,5° bis 6° und insbesondere 1° bis 3° beträgt.

4. Kondenswasserabführung nach Anspruch 1, 2 oder 3, **dadurch gekennzeichnet, dass** die Kondenswasserabführung einstückig gefertigt ist.

5. Kondenswasserabführung nach einem der vorhergehenden Ansprüche, **dadurch gekennzeichnet, dass** die Kondenswasserabführung aus Kunststoff, insbesondere aus PVC, PS, PMMA, PP, PE, ABS, ASA oder einem faserverstärkten Kunststoff, aus Metall oder aus Ton oder Beton gefertigt ist.

6. Dachentlüftungssystem (20) umfassend eine Kondenswasserabführung (10) nach einem der vorhergehenden Ansprüche und ein rohrförmiges Lüfterelement (21) mit einer Öffnung (22), **dadurch gekennzeichnet, dass** die Kondenswasserabführung in das Lüfterelement einschiebbar und an der Innenwand des Lüftungselements wasserfest derart fixierbar ist, dass der tiefste Punkt des Neigungsabschnitts (12) zur Öffnung (22) des Lüfterelements orientiert ist.

7. Dachentlüftungssystem (20) nach Anspruch 6, **dadurch gekennzeichnet, dass** die Öffnung (22) des Lüftungselements (21) ein Langloch ist.

8. Dachentlüftungssystem (20) nach Anspruch 6 oder 7, **dadurch gekennzeichnet, dass** sich die Öffnung (22) des Lüftungselements (21) in Einbaulage auf der Außenseite des Dachs befindet.

9. Verfahren zur Herstellung eines Dachentlüftungssystems (20) für Steildächer und/oder Flachdächer umfassend folgende Schritte:
- Bereitstellen einer Kondenswasserabführung (10) gemäß einem der Ansprüche 1 bis 5,
- Bereitstellen eines rohrförmigen Lüfterelements (21) mit einer Öffnung (22),
- Einschieben der Kondenswasserabführung (10) in das Lüfterelement (21) in einer Orientierung, die ein Ablaufen von Kondenswasser entlang der Neigung des Neigungsabschnitts (12) zur Öffnung (22) des Lüfterelements sicherstellt,
- Befestigen der Kondenswasserabführung (10) an der Innenseite des Lüfterelements (21) in dieser Orientierung.

10. Verfahren nach Anspruch 9, **dadurch gekennzeichnet, dass** das Befestigen der Kondenswasserabführung (10) mittels Kleben erfolgt.

## Claims

1. Discharge device (10) for discharging condensed water for roof vents consisting of a ring for mounting on the inside of a roof vent pipe, including a first substantially round annular section (11) with a first diameter 01, a middle inclination section (12) joining the first annular section in axial direction, and a second annular section (13) joining the inclination section in axial direction with a second diameter D2, wherein the second diameter D2 is smaller than the first diameter D1, **characterized in that** the middle inclination section (12) has an inclination transversely to the longitudinal axis of the ring and additionally has an inclination in radial direction of the ring, wherein both inclinations are different.

2. Discharge device for discharging condensed water (10) according to claim 1, **characterized in that** the inclination to the horizontal direction of the inclination section (12) is defined by the difference of the hights of the shoulders (14, 15) of the first annular section (11).

3. Discharge device for discharging condensed water according to claim 1 or 2, **characterized in that** the inclination to the horizontal direction of the inclination section (12) is 0,05° to 10°, preferably 0,5° to 6° and especially 1° to 3°.

4. Discharge device for discharging condensed water according to claim 1, 2 or 3, **characterized in that** the discharge device is formed in one piece.

5. Discharge device for discharging condensed water according to one of the preceeding claims, **characterized in that** the discharge device is made of plastic material, especially of PVC, PS, PMMA, PP, PE, ABS, ASA or a fiber reinforced plastic material, of metal or of clay or of concrete.

6. Roof ventilation system (20) including a discharge device (10) according to one of the preceeding claims and a tubular venting element (21) with an aperture (22), **characterized in that** the discharge device is insertable into the venting element and is mountable on the inside wall of the venting element watertight in a fashion that the lowest point of the inclination section (12) is orientated to the aperture (22) of the venting element.

7. Roof ventilation system (20) according to claim 6, **characterized in that** the aperture (22) of the venting element (21) is an oblong hole.

8. Roof ventilation system (20) according to claim 6 or 7, **characterized in that** the aperture (22) of the venting selement (21) in its installation position is on the outside of the roof.

9. Method for producing a roof ventilation system (20) for steep roofs and/or flat roofs including the following steps:
- provinding a discharge device for discharging condensed water (10) according to one of the claims 1 to 5,
- providing a tubular venting element (21) with an aperture (22),
- inserting the discharge device for discharging condensed water (10) into the venting element (21) in a orientation, which ensures a draining of condensed water along the inclination of the inclination section (12) to the aperture (22) of the venting element,
- fixing of the discharge device for discharging condensed water (10) on the inside of the enting element (21) in this orientation.

10. Method according to claim 9, **characterized in that** the fixing of the discharge device for discharging condensed water (10) is made by adhesive bonding.

## Revendications

1. Evacuation d'eau de condensation (10) pour ventilateur de toit, constituée d'une bague pour le montage intérieur dans un tuyau d'aération de toit, comprenant une première portion annulaire (11) essentiellement circulaire ayant un premier diamètre D1, une portion d'inclinaison centrale (12) s'y raccordant dans la direction axiale, et une deuxième portion annulaire (13) se raccordant à celle-ci dans la direction axiale, ayant un deuxième diamètre D2, le deuxième diamètre D2 étant inférieur au premier diamètre D1, **caractérisée en ce que** la portion d'inclinaison centrale (12) présente une inclinaison transversalement à l'axe longitudinal de la bague et de plus une inclinaison dans la direction radiale de la bague, les deux inclinaisons étant différentes.

2. Evacuation d'eau de condensation selon la revendication 1, **caractérisée en ce que** l'inclinaison par rapport à l'horizontale de la portion d'inclinaison (12) est définie par la différence entre les hauteurs d'épaulement (14, 15) de la première portion annulaire (11).

3. Evacuation d'eau de condensation selon la revendication 1 ou 2, **caractérisée en ce que** l'inclinaison par rapport à l'horizontale de la portion d'inclinaison (12) vaut 0,05° à 10°, de préférence 0,5° à 6° et en particulier 1° à 3°.

4. Evacuation d'eau de condensation selon la revendication 1, 2 ou 3, **caractérisée en ce que** l'évacuation d'eau de condensation est réalisée d'une seule pièce.

5. Evacuation d'eau de condensation selon l'une quelconque des revendications précédentes, **caractérisée en ce que** l'évacuation d'eau de condensation est fabriquée en plastique, en particulier en PVC, PS, PMMA, PP, PE, ABS, ASA ou en un plastique renforcé par des fibres, en métal ou en argile ou en béton.

6. Système d'aération de toit (20) comprenant une évacuation d'eau de condensation (10) selon l'une quelconque des revendications précédentes et un élément de ventilateur tubulaire (21) comprenant une ouverture (22), **caractérisé en ce que** l'évacuation d'eau de condensation peut être insérée dans l'élément de ventilateur et peut être fixée de manière étanche à l'eau sur la paroi interne de l'élément de ventilation de telle sorte que le point le plus bas de la portion d'inclinaison (12) soit orienté vers l'ouverture (22) de l'élément de ventilateur.

7. Système d'aération de toit (20) selon la revendication 6, **caractérisé en ce que** l'ouverture (22) de l'élément de ventilation (21) est un trou oblong.

8. Système d'aération de toit (20) selon la revendication 6 ou 7, **caractérisé en ce que** l'ouverture (22) de l'élément de ventilation (21) se trouve, dans la position d'installation, sur le côté extérieur du toit.

9. Procédé de fabrication d'un système d'aération de toit (20) pour des toits en pente et/ou des toits plats, comprenant les étapes suivantes :
- fourniture d'une évacuation d'eau de condensation (10) selon l'une quelconque des revendications 1 à 5,
- fourniture d'un élément de ventilateur tubulaire (21) avec une ouverture (22),
- insertion de l'évacuation d'eau de condensation (10) dans l'élément de ventilateur (21) dans une orientation qui garantit un écoulement de l'eau de condensation le long de l'inclinaison de la portion inclinaison (12) vers l'ouverture (22) de l'élément de ventilateur,
- fixation de l'évacuation d'eau de condensation (10) au côté intérieur de l'élément de ventilateur (21) dans cette orientation.

10. Procédé selon la revendication 9, **caractérisé en ce que** la fixation de l'évacuation d'eau de condensation (10) s'effectue au moyen d'un collage.
